# EUROPÄISCHE PATENTSCHRIFT

(11) **EP 2 242 936 B1**
(45) Veröffentlichungstag und Bekanntmachung des Hinweises auf die Patenterteilung: **02.11.2011**
(21) Anmeldenummer: 09704455.6
(22) Anmeldetag: 17.01.2009
(51) Int. Cl.: F16C 33/52, F16C 33/36

(54) **LAGERKÄFIG MIT ROLLENFÖRMIGEN WÄLZKÖRPERN**
ROLLING BEARING CAGE WITH ROLLERS
CAGE DE ROULEMENT AVEC ROULEAUX

(30) Priorität: 22.01.2008 DE 102008005376
(43) Veröffentlichungstag der Anmeldung: 27.10.2010
(73) Patentinhaber: Schaeffler Technologies GmbH & Co. KG, 91074 Herzogenaurach (DE)
(72) Erfinder: MESSERSCHMIDT, Rainer, 40593 Düsseldorf (DE); VAN DER KNOKKE, Henri, 97464 Niederwerrn (DE)
(86) Internationale Anmeldenummer: PCT/DE2009/000046
(87) Internationale Veröffentlichungsnummer: WO 2009/092351

(56) Entgegenhaltungen:
- FR-A- 500 748
- JP-A- 2003 184 892
- JP-A- 2006 071 063
- US-A- 1 458 150

## Beschreibung

Die Erfindung betrifft einen Lagerkäfig, beispielsweise für größere Radial- oder Axialrollenlager, mit zwei axial gegenüberliegenden, kreisringförmigen Seitenscheiben, die mittels Verbindungselemente auf Abstand zueinander gehalten werden, mit zwischen den Seitenscheiben angeordneten rollenförmigen Wälzkörpern, die stirnseitig bolzenartige Elemente aufweisen, wobei zumindest auf einer axialen Seite der Wälzkörper eine Seitenscheibe mit radialen Ausnehmungen vorgesehen ist, in welche die bolzenartige Elemente hineinragen, und bei dem wenigstens ein Sicherungsmittel vorgesehen ist, welches im Montagezustand dazu geeignet ist, die bolzenartigen Elemente im Bereich der radialen Ausnehmungen zu halten.

### Hintergrund der Erfindung

Mit derartigen Lagerkäfigen bestückte Wälzlager weisen eine vergleichsweise hohe Tragfähigkeit auf, da eine große Anzahl von Wälzkörpern in den Lagerkäfigen montiert werden kann. Gleichzeitig ist eine vereinfachte Montierbarkeit der Lagerkäfige und mithin der Wälzlager möglich.

In der US 1,458,150 ist ein gattungsgemäßer Lagerkäfig beschrieben. Dieser weist zwei Seitenscheiben auf, von denen die eine einen etwas kleineren Außendurchmesser besitzt als die andere. In der kleineren Seitenscheibe sind radial außenseitige Ausnehmungen eingebracht, die über den Umfang der Seitenscheibe gleichmäßig verteilt sind. In diese Ausnehmungen ragen bolzenartige Elemente von zwischen den Seitenscheiben befindlichen, rollenförmigen Wälzkörpern hinein. In der anderen Seitenscheibe sind Bohrungen eingebracht, in die auf der anderen axialen Seite der Wälzkörper deren bolzenartige Elemente ebenfalls hineinragen. Dadurch werden die zwischen den Seitenscheiben befindlichen Wälzkörper in definiertem Abstand zueinander gehalten. Zur Sicherung wird die kleinere Seitenscheibe von einem kreisringförmigen Sicherungsmittel radial übergriffen, welches in der Montageposition die Öffnungen der radialen Ausnehmungen axial und radial abdeckt.

Die FR 500 748 zeigt einen ähnlicken käfig, wobei kreisringförmige Sicherungsmitel teilweise in radial außenseitige Ausnehmungen der Seitenscheiben des käfigs eingeführt sind.

Aus der US 2,565,070 ist ein Lagerkäfig bekannt, der zwei Seitenscheiben mit radial außenseitigen Ausnehmungen aufweist. Die zwischen den Seitenscheiben befindlichen rollenförmigen Wälzkörper haben bolzenartige, angeformte Elemente, die in die Ausnehmungen der Seitenscheiben hineinragen.

### Aufgabe der Erfindung

Ausgehend von den Lösungen des bekannten Standes der Technik liegt der Erfindung die Aufgabe zu Grunde, einen dazu alternativen Lagerkäfig vorzustellen, der besonders einfach montiert bzw. demontiert werden kann.

### Beschreibung der Erfindung

Der Erfindung liegt die Erkenntnis zugrunde, dass die Ausgestaltung des genannten Sicherungsmittels zur Halterung der bolzenartigen, an die Wälzkörper angeformten Elemente einen großen Einfluss auf die Flexibilität hinsichtlich der Montage bzw. Demontage des Lagerkäfigs hat.

Gemäß den Merkmalen des Oberbegriffs des Hauptanspruchs geht die Erfindung aus von einem Lagerkäfig, beispielsweise für größere Radial- oder Axialrollenlager, mit zwei axial gegenüberliegenden kreisringförmigen Seitenscheiben, die mittels Verbindungselemente auf Abstand zueinander gehalten werden, mit zwischen den Seitenscheiben angeordneten rollenförmigen Wälzkörpern, die stirnseitig bolzenartige Elemente aufweisen, wobei zumindest auf einer axialen Seite der Wälzkörper eine Seitenscheibe mit radialen Ausnehmungen vorgesehen ist, in welche die bolzenartige Elemente hineinragen, und bei dem wenigstens ein Sicherungsmittel vorgesehen ist, welches im Montagezustand dazu geeignet ist, die bolzenartigen Elemente im Bereich der radialen Ausnehmungen zu halten.

Zur Lösung der gestellten Aufgabe ist zudem vorgesehen, dass als Sicherungsmittel Formelemente vorgesehen sind, die jeweils zumindest teilweise in die radialen Ausnehmungen der Seitenscheibe einführbar sind. Durch diesen Aufbau wird eine leichte Montierbarkeit bzw. Demontierbarkeit des Lagerkäfigs erzielt, wobei gleichzeitig auch eine hohe Flexibilität erreicht wird. So können die einzelnen Wälzkörper getrennt voneinander durch Lösen bzw. Einführen der als Sicherungsmittel dienenden Formelemente montiert (gesichert) bzw. demontiert (entsichert) werden. Bei Bedarf können auch nur einzelne, beispielsweise beschädigte Wälzkörper oder Sicherungselemente ausgewechselt werden, welches zu Kostenreduzierungen bei der Instandsetzung führt.

Eine erste vorteilhafte Weiterbildung des Erfindungsgedankens sieht vor, dass die als Sicherungsmittel dienenden Formelemente im Montagezustand bevorzugt durch Reibschluss und/oder durch Stoffschluss in den radialen Ausnehmungen befestigt sind. Auf diese Weise sind keine zusätzlichen Befestigungsmittel für die Formelemente notwendig bzw. wir die Sicherheit der Verbindung erhöht. Alternativ kann die Befestigung der Formelemente in den Ausnehmungen bei Auswahl geeigneten Materials jedoch auch durch Magnetkraft erfolgen.

Gemäß einer zweiten zweckmäßigen Ausgestaltung der Erfindung ist vorgesehen, dass mit den als Sicherungsmittel dienenden Formelementen die radialen Ausnehmungen der Seitenscheibe im Wesentlichen vollständig formschlüssig ausfüllbar sind. Durch diesen Aufbau kann ein guter Halt der bolzenartigen Elemente der Wälzkörper erreicht werden.

In einer bevorzugten Weitebildung ist ein besonders guter Halt ist dann erzielbar, wenn zweckmäßigerweise die als Sicherungsmittel dienenden Formelemente an ihren den bolzenartigen Elementen zugewandten Enden halbkreisförmige Ausnehmungen und die Ausnehmungen der Seitenscheibe an ihren den bolzenartigen Elementen zugewandten Enden ebenfalls halbkreisförmige Ausnehmungen aufweisen, derart, dass sich im Montagezustand der als Sicherungsmittel dienenden Formelemente die Ausnehmungen dieser Formelemente und die Ausnehmungen der Seitenscheibe zu einem Kreis ergänzen.

Um eine möglichst kompakte Bauweise des Lagerkäfigs und somit auch des Wälzlagers zu erzielen, ist es äußerst vorteilhaft, wenn die als Sicherungsmittel dienenden Formelemente im Montagezustand oberflächenbündig mit der Seitenscheibe angeordnet sind.

Wenn gemäß einer weiteren zweckmäßigen Weiterbildung der Erfindung auf jeder axialen Seite der Wälzkörper eine Seitenscheibe mit radialen Ausnehmungen vorgesehen ist, in welche die bolzenartigen Elemente der Wälzkörper hineinragen und mit den als Sicherungsmittel dienenden Formelementen gesichert sind, lässt sich eine ausgesprochen leichte, optimale Montierbarkeit des Lagerkäfigs mitsamt Wälzkörpern auf einem Wälzlager erreichen. Die rollenförmigen Wälzkörper können dann von oben bzw. von unten (je nach Bauart der Seitenscheiben, d.h. radialer Ausrichtung der Ausnehmungen) mit ihren bolzenartigen Elemente in die Seitenscheiben eingesetzt und anschließend mittels den als Sicherungsmittel dienenden Formelementen gesichert werden. Eine weitere Art der Lagerkäfigmontage ergibt sich, wenn der Innenring des Lagers zumindest einseitig ohne axialen Bord ausgebildet ist, da somit der Lagerkäfig komplett mit den Wälzkörpern außerhalb des Lagers vormontiert und dann auf den Innenring des Lagers aufgeschoben werden kann.

Es kann von Vorteil sein, wenn die Ausnehmungen in der Seitenscheibe radial außenseitig angeordnet sind. Gleichermaßen kann aber auch zweckmäßig sein, die Ausnehmungen in der Seitenscheibe radial innenseitig anzuordnen.

Schließlich ist es zur Reduzierung der Teilevielfalt und des Montageaufwandes sehr vorteilhaft, wenn die bolzenartigen Elemente der Wälzkörper einstückig mit den rollenförmigen Wälzkörpern verbunden sind.

### Kurze Beschreibung der Zeichnungen

Eine bevorzugte Ausführungsform des erfindungsgemäß ausgebildeten Lagerkäfigs wird nachfolgend unter Bezugnahme auf die beigefügten Zeichnungen näher erläutert. Dabei zeigen:
- Figur 1: eine perspektivische Darstellung eines Teils des erfindungsgemäßen Lagerkäfigs mit einem als Sicherungsmittel dienenden Formelement, wobei der Lagerkäfig nur teilweise montiert ist;
- Figur 2: eine perspektivische Darstellung eines Teils vom erfindungsgemäßen Lagerkäfig, wobei der Lagerkäfig nur teilweise montiert ist, mit zwei als Sicherungsmittel dienenden Formelementen;
- Figur 3: eine perspektivische Darstellung des erfindungsgemäßen Lagerkäfigs im Längsschnitt, wobei der Lagerkäfig auf einem Innenring eines Wälzlagers aufgebracht ist.

### Ausführliche Beschreibung der Zeichnungen

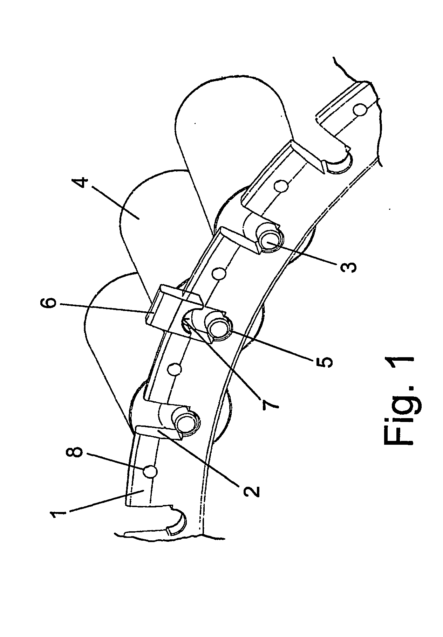

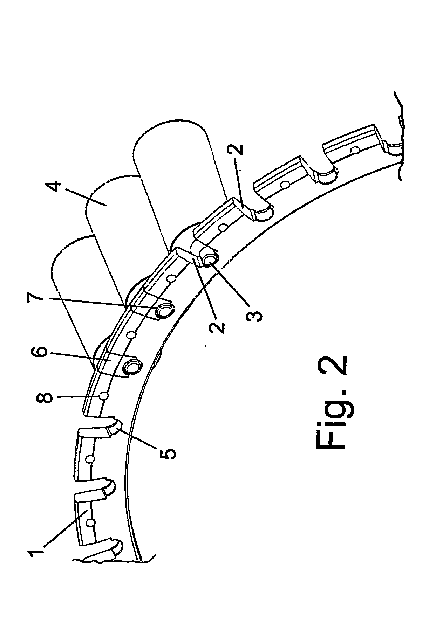

Zunächst wird auf Figur 1 und Figur 2 Bezug genommen. In diesen Figuren ist eine Seitenscheibe 1 ersichtlich, die nur zum Teil dargestellt ist. Die Seitenscheibe 1 ist mit radial außenseitig angeordneten Ausnehmungen 2 versehen, in die bolzenartige Elemente 3 hineinragen. Die bolzenartigen Elemente 3 sind stirnseitig mit rollenförmigen, zylindrischen Wälzkörpern 4 einstückig verbunden. Ferner ist dargestellt, dass die Ausnehmungen 2 sich vom radial äußeren Ende der Seitenscheibe 1 in Richtung des radial inneren Endes der Seitenscheibe 1 zunächst rechteckförmig erstrecken und an ihrem, dem bolzenartigen Element 3 zugewandten Ende eine in etwa mittig ausgerichtete, halbkreisförmige Ausnehmung 5 aufweisen. In diese Ausnehmungen 5 sind die bolzenartigen Elemente 3 eingelegt.

Des weiteren ist ein als Sicherungsmittel dienendes Formelement 6 gezeigt, welches von oben in die Ausnehmung 2 einführbar ist und an seinem, dem bolzenartigen Element 3 zugewandten Ende ebenfalls mit einer in etwa mittig ausgerichteten, halbkreisförmigen Ausnehmung 7 versehen ist.

Ferner sind axial ausgerichtete Löcher 8 in der Seitenscheibe 1 erkennbar, die zur Aufnahme von nicht gezeigten stabförmigen Verbindungselementen dienen, welche im Montagezustand eine nicht gezeigte zweite Seitenscheibe auf Abstand zur Seitenscheibe 1 halten.

In Figur 2 sind zwei als Sicherungsmittel dienende Formelemente 6 dargestellt, die vollständig in die Ausnehmungen 2 eingeführt sind, so dass die bereits erwähnten Ausnehmungen 5 und 7 das bolzenartige Element 3 komplett radial umschließen.

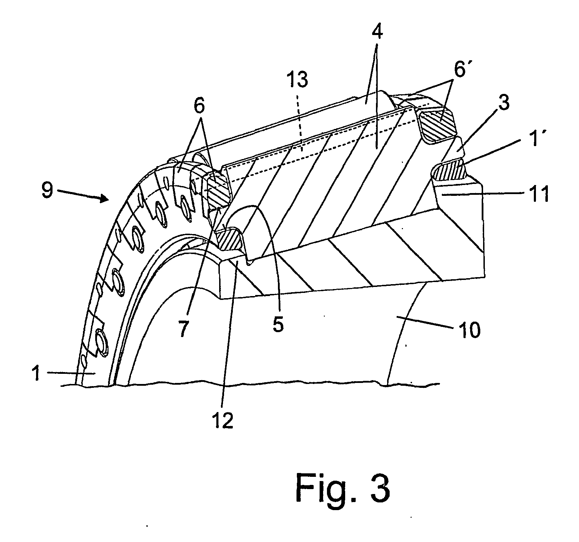

Figur 3 zeigt einen vollständig montierten Lagerkäfig 9 in einer längs geschnittenen Perspektivdarstellung, wobei der Lagerkäfig 9 mitsamt seinen Wälzkörpern 4 auf einem Innenring 10 eines Lagers montiert ist. Der Innenring 10 weist einstückig mit diesem verbundene axiale Borde 11 und 12 auf, zwischen denen die Wälzkörper 4 geführt sind. Ferner ist eine zweite kreisringförmige Seitenscheibe 1' mit ebenfalls zur Sicherung dienenden Formelementen 6' erkennbar, wobei die Seitenscheiben 1 und 1' mittels gestrichelt angedeuteter, stabförmiger Verbindungselemente 13 auf Abstand zueinander gehalten sind. Es ist gut erkennbar, wie die bolzenartigen Elemente 3 in den Seitenscheiben 1 und 1' durch die Formelemente 6, 6' gesichert werden.

Die Montage des Lagers erfolgt auf einfache Weise durch Vormontage der Seitenscheiben 1, 1' mittels der Verbindungselemente 13 und anschließendes Aufschieben auf den Innenring 10. Anschließend werden die Wälzkörper 4 stückweise von oben in die Ausnehmungen 5 eingelegt und durch Einführen der als Sicherungsmittel dienenden Formelemente 6 in die Ausnehmungen 2 gesichert. Dabei ist die Abmessung der Formelemente 6 bzw. 6' in der Breite vorzugsweise so gewählt, dass diese selbständig durch Reibschluss in den Ausnehmungen 2 verbleiben. Abschließend braucht nur noch ein nicht gezeigter Außenring des Lagers aufgeschoben werden. Ein Auswechseln einzelner Wälzkörper 4 oder Formelemente 6 bzw. 6' ist jederzeit leicht möglich.

### Bezugszahlenliste

- 1, 1': Seitenscheibe
- 2: Radiale Ausnehmungen in der Seitenscheibe
- 3: Bolzenartige Elemente
- 4: Rollenförmige Wälzkörper
- 5: Halbkreisförmige Ausnehmung
- 6, 6': Als Sicherungsmittel dienende Formelemente
- 7: Halbkreisförmige Ausnehmung im Formelement 6, 6'
- 8: Loch in der Seitenscheibe 2
- 9: Lagerkäfig
- 10: Innenring des Wälzlagers
- 11: Lagerbord des Innenrings
- 12: Lagerbord des Innenrings
- 13: Stabförmiges Verbindungselement

## Patentansprüche

1. Lagerkäfig (9), beispielsweise für größere Radial- oder Axialrollenlager, mit zwei axial gegenüberliegenden, kreisringförmigen Seitenscheiben (1, 1'), die mittels Verbindungselemente (13) auf Abstand zueinander gehalten werden, mit zwischen den Seitenscheiben (1; 1') angeordneten rollenförmigen Wälzkörpern (4), die stirnseitig bolzenartige Elemente (3) aufweisen, wobei zumindest auf einer axialen Seite der Wälzkörper (4) eine Seitenscheibe (1; 1') mit radialen Ausnehmungen (2) vorgesehen ist, in welche die bolzenartigen Elemente (3) hineinragen, und bei dem wenigstens ein Sicherungsmittel vorgesehen ist, welches im Montagezustand dazu geeignet ist, die bolzenartigen Elemente (3) im Bereich der radialen Ausnehmungen (2) zu halten, und wobei als Sicherungsmittel Formelemente (6, 6') vorgesehen sind, die jeweils zumindest teilweise in die radialen Ausnehmungen (2) der Seitenscheibe (1; 1') einführbar sind, **dadurch gekennzeichnet, dass** die als Sicherungsmittel dienenden Formelemente (6; 6') an ihren den bolzenartigen Elementen (3) zugewandten Enden halbkreisförmige Ausnehmungen (7) aufweisen, dass die Ausnehmungen (2) der Seitenscheibe (1; 1') an ihren den bolzenartigen Elementen (3) zugewandten Enden ebenfalls halbkreisförmige Ausnehmungen (5) aufweisen, derart, dass sich im Montagezustand der als Sicherungsmittel dienenden Formelemente (6; 6') die Ausnehmungen (7) dieser Formelemente (6; 6') und die Ausnehmungen (5) der Seitenscheibe (1; 1') zu einem Kreis ergänzen.

2. Lagerkäfig nach Anspruch 1, **dadurch gekennzeichnet, dass** die als Sicherungsmittel dienenden Formelemente (6; 6') im Montagezustand bevorzugt durch Reibschluss und/oder durch Stoffschluss in den radialen Ausnehmungen (2) befestigt sind.

3. Lagerkäfig nach Anspruch 2, **dadurch gekennzeichnet, dass** mit den als Sicherungsmittel dienenden Formelementen (6; 6') die radialen Ausnehmungen (2) der Seitenscheibe (1; 1') im wesentlichen vollständig formschlüssig ausfüllbar sind.

4. Lagerkäfig nach einem der vorhergehenden Ansprüche, **dadurch gekennzeichnet, dass** die als Sicherungsmittel dienenden Formelemente (6; 6') im Montagezustand oberflächenbündig mit der Seitenscheibe (1; 1') angeordnet sind.

5. Lagerkäfig nach einem der vorhergehenden Ansprüche, **dadurch gekennzeichnet, dass** auf jeder axialen Seite der Wälzkörper (4) eine Seitenscheibe (1; 1') mit radialen Ausnehmungen (2) vorgesehen ist, in die die bolzenartigen Elemente (3) der Wälzkörper (4) hineinragen, und welche mit den als Sicherungsmittel dienenden Formelementen (6; 6') gesichert sind.

6. Lagerkäfig nach einem der Ansprüche 1 bis 5, **dadurch gekennzeichnet, dass** die Ausnehmungen (2) in der Seitenscheibe (1) radial außenseitig angeordnet sind.

7. Lagerkäfig nach einem der Ansprüche 1 bis 5, **dadurch gekennzeichnet, dass** die Ausnehmungen (2) in der Seitenscheibe (1) radial innenseitig angeordnet sind.

8. Lagerkäfig nach einem der vorhergehenden Ansprüche, **dadurch gekennzeichnet, dass** die bolzenartigen Elemente (3) einstückig mit den rollenförmigen Wälzkörpern (4) verbunden sind.

## Claims

1. Bearing cage (9), for example for relatively large radial or axial roller bearings, having two axially opposite, circular ring-shaped side discs (1, 1') which are held with a spacing to one another by means of connecting elements (13), having roller-shaped rolling bodies (4) which are arranged between the side discs (1; 1') and which have pin-like elements (3) on the ends, wherein at least on one axial side of the rolling bodies (4), a side disc (1; 1') is provided which has radial recesses (2) into which the pin-like elements (3) project, and in which bearing cage at least one locking means is provided which, in the assembled state, is suitable for holding the pin-like elements (3) in the region of the radial recesses (2), and wherein as locking means, shaped elements (6, 6') are provided which can in each case be inserted at least partially into the radial recesses (2) of the side disc (1; 1'), **characterized in that** the shaped elements (6; 6') which serve as locking means have semi-circular recesses (7) on their ends facing towards the pin-like elements (3), **in that** the recesses (2) of the side disc (1; 1') likewise have semi-circular recesses (5) at their ends facing towards the pin-like elements (3), in such a way that, when the shaped elements (6; 6') which serve as locking means are in the assembled state, the recesses (7) of said shaped elements (6; 6') and the recesses (5) of the side disc (1; 1') complement one another so as to form a circle.

2. Bearing cage according to Claim 1, **characterized in that**, in the assembled state, the shaped elements (6; 6') which serve as locking means are fastened in the radial recesses (2) preferably by means of frictional locking and/or by means of a cohesive connection.

3. Bearing cage according to Claim 2, **characterized in that** the radial recesses (2) of the side disc (1; 1') can be substantially completely filled out in a positively locking manner by the shaped elements (6; 6') which serve as locking means.

4. Bearing cage according to one of the preceding claims, **characterized in that**, in the assembled state, the shaped elements (6; 6') which serve as locking means are arranged flush with the surface of the side disc (1; 1').

5. Bearing cage according to one of the preceding claims, **characterized in that**, on each axial side of the rolling bodies (4), a side disc (1; 1') is provided which has radial recesses (2) into which the pin-like elements (3) of the rolling bodies (4) project and which are locked by means of the shaped elements (6; 6') which serve as locking means.

6. Bearing cage according to one of Claims 1 to 5, **characterized in that** the recesses (2) in the side disc (1) are arranged radially at the outside.

7. Bearing cage according to one of Claims 1 to 5, **characterized in that** the recesses (2) in the side disc (1) are arranged radially at the inside.

8. Bearing cage according to one of the preceding claims, **characterized in that** the pin-like elements (3) are integrally connected to the roller-shaped rolling bodies (4).

## Revendications

1. Cage de roulement (9), par exemple pour des roulements radiaux ou axiaux d'assez grande dimension, avec deux disques latéraux (1, 1') en forme de couronne circulaire opposés dans le plan axial maintenus à une certaine distance l'un de l'autre à l'aide d'éléments de liaison (13), avec des corps de rouleau (4) en forme de cylindre disposés entre les disques latéraux (1 ; 1') comportant sur le côté avant des éléments (3) de type goujon, au moins un disque latéral (1 ; 1') étant pourvu d'évidements radiaux (2) sur un côté axial des corps de rouleau (4) dans lesquels pénètrent les éléments (3) de type goujon, et dans laquelle au moins un moyen de fixation est prévu, adapté pour maintenir à l'état de montage les éléments (3) de type goujon dans la zone des évidements radiaux (2) et des éléments moulés (6, 6') étant prévus pour servir de moyen de fixation, ces éléments pouvant respectivement être introduits au moins en partie dans les évidements radiaux (2) du disque latéral (1 ; 1'), **caractérisée en ce que** les éléments moulés (6 ; 6') servant de moyen de fixation comportent des évidements (7) en forme de demi-cercle au niveau de leurs extrémités orientées vers les éléments (3) de type goujon, que les évidements (2) du disque latéral (1 ; 1') comportent également des évidements (5) en forme de demi-cercle au niveau de leurs extrémités orientées vers les éléments (3) de type goujon, de telle sorte que les évidements (7) de ces éléments moulés (6 ; 6') et les évidements (5) du disque latéral (1 ; 1') viennent se compléter pour former un cercle à l'état de montage des éléments moulés (6 ; 6') servant de moyen de fixation.

2. Cage de roulement selon la revendication 1, **caractérisée en ce que** les éléments moulés (6 ; 6') servant de moyen de fixation sont fixés à l'état de montage de façon préférée par complémentarité de frottements et/ou par complémentarité de matières dans les évidements radiaux (2).

3. Cage de roulement selon la revendication 2, **caractérisée en ce que** les évidements radiaux (2) du disque latéral (1 ; 1') peuvent pour l'essentiel être entièrement remplis par complémentarité de formes avec les éléments moulés (6 ; 6') servant de moyen de fixation.

4. Cage de roulement selon l'une quelconque des revendications précédentes, **caractérisée en ce que** les éléments moulés (6 ; 6') servant de moyen de fixation sont disposés en affleurement de surface avec le disque latéral (1 ; 1') à l'état de montage.

5. Cage de roulement selon l'une quelconque des revendications précédentes, **caractérisée en ce qu'**un disque latéral (1 ; 1') est pourvu d'évidements radiaux (2) sur chaque côté axial des corps de rouleau (4) dans lesquels pénètrent les éléments (3) de type goujon des corps de rouleau (4) et qui sont fixés aux éléments moulés (6 ; 6') servant de moyen de fixation.

6. Cage de roulement selon l'une quelconque des revendications 1 à 5, **caractérisée en ce que** les évidements (2) sont disposés à l'extérieur dans le plan radial dans le disque latéral (1).

7. Cage de roulement selon l'une quelconque des revendications 1 à 5, **caractérisée en ce que** les évidements (2) sont disposés à l'intérieur dans le plan radial dans le disque latéral (1).

8. Cage de roulement selon l'une quelconque des revendications précédentes, **caractérisée en ce que** les éléments (3) de type goujon sont reliés d'un seul tenant avec les corps de rouleau (4) en forme de cylindre.
